## Europäisches Patentamt
## European Patent Office
## Office européen des brevets

(19)

(11) Veröffentlichungsnummer : **0 088 051**
**B1**

(12) **EUROPÄISCHE PATENTSCHRIFT**

(45) Veröffentlichungstag der Patentschrift :
12.11.86

(51) Int. Cl.⁴ : **A 01 N 25/10**, A 01 N 25/34

(21) Anmeldenummer : **83810076.6**

(22) Anmeldetag : **21.02.83**

(54) **Rodentizide Köder.**

(30) Priorität : **26.02.82 CH 1197/82**

(43) Veröffentlichungstag der Anmeldung :
**07.09.83 Patentblatt 83/36**

(45) Bekanntmachung des Hinweises auf die Patenterteilung : **12.11.86 Patentblatt 86/46**

(84) Benannte Vertragsstaaten :
**AT BE CH DE FR IT LI NL SE**

(56) Entgegenhaltungen :
DE-A- 2 647 722
DE-B- 1 146 695
FR-A- 2 288 464
CENTRAL PATENTS INDEX BASIC ABSTRACTS JOURNAL AGDOC, Sektion C, Woche T23, 1972, Zusammenfassung Nr. 37316T, London GB. IKARI YAKUHIN: "Rat poison - prep'd by pelletising powdered poison / polyvinyl emulsion mixture"
Die Akte enthält technische Angaben, die nach dem Eingang der Anmeldung eingereicht wurden und die nicht in dieser Patentschrift enthalten sind.

(73) Patentinhaber : **CIBA-GEIGY AG**
**Klybeckstrasse 141**
**CH-4002 Basel (CH)**

(72) Erfinder : **Gschwind, Nikolaus, Dr.**
**Sennheimerstrasse 12**
**CH-4054 Basel (CH)**
Erfinder : **Frerot, Günter**
**Habshagstrasse 24**
**CH-4153 Reinach (CH)**
Erfinder : **Spannring, Hartmut**
**Fin de Rosset**
**CH-1566 St. Aubin (CH)**

**0 088 051**

**Beschreibung**

Die vorliegende Erfindung betrifft festgeformte rodentizide Block-Köder, Verfahren zu ihrer Herstellung sowie ihre Verwendung zur Bekämpfung von Nagetieren, insbesondere Ratten und Mäusen.

Die Bekämpfung von Ratten, Mäusen und anderen schädlichen Nagern stellt ein Problem erster Ordnung dar, weil diese Tiere als Ueberträger schwerer Infektionskrankheiten und als ungeheurer Schadfaktor bei der Vernichtung und Verunreinigung von Nahrungsmitteln eine Rolle spielen. Unter dieser Tiergattung nehmen die kommensalen Nager, vor allem die Ratten, eine bevorzugte Stellung ein, da sie die gleichen Lebensräume wie der Mensch bevölkern und an seinem Nahrungshaushalt teilnehmen. Die Wanderratte oder Wasserratte (Rattus norvegicus), die Hausratte (Rattus rattus), die Hausmaus (Mus musculus), die Feldmaus (Microtus arvalis) und die Wühlmaus (Arvicola terrestris) gehören zu der häufigsten Gruppe der Schadnager.

Die als Sippentiere lebenden Nager besitzen eine hohe Anpassungsfähigkeit und grossen Spürsinn. Sie verfügen, und dies betrifft insbesondere die Ratten, untereinander über ein ausgeprägtes Warnsystem. Jeder Bekämpfungserfolg ist weitgehend davon abhängig, wie gut man die charakteristische Lebens- und Verhaltensweise abzuschätzen versteht.

Grundsätzlich nehmen Mäuse und Ratten die Nahrung unsystematisch und zufällig auf, sie verweilen selten bei einem einzigen Futter, sobald eine Palette verschiedener Nahrungstypen zur Verfügung steht. Schon dieses Verhalten macht die Bekämpfung schwierig.

Giftköder werden aber darüberhinaus von Ratten sofort verschmäht, wenn sie nach Geschmack und Verträglichkeit als solche identifiziert werden. Eine Massenbekämpfung trifft somit immer auf Schwierigkeiten, wenn die Artgenossen das Verenden eines Tieres mit dem Köder in Verbindung bringen und diesen meiden.

Es hat nicht an Versuchen gefehlt, Köder durch Lockstoffe und Geschmackskorrigenzien für Ratten palatabel zu machen und gleichzeitig Sorge zu tragen, dass der Giftstoff nicht schon im oberen Magen-Darm-Trakt absorbiert wird, wo seine Wirkung noch während der Nahrungsaufnahme, also zu frühzeitig einsetzt. In solchen Fällen wird regelmässig beobachtet, dass die betroffene Ratte sofort mit dem Fressen aufhört und dass in der Folge keines der zur gleichen Sippe gehörenden Tiere diesen oder einen gleichartigen Giftköder berührt.

Die subakuten Rodentizide, vor allem die Antikoagulanzien stellen auf Grund ihrer verzögerten, aber sicheren Wirkung heutzutage die bedeutendste Gruppe wirksamer Präparate dar. Dennoch ist die erfolgreiche Massen-Anwendung noch immer hinter den Erwartungen zurückgeblieben.

Nach wie vor stellt sich daher das Problem, rodentizide Mittel verhaltensspezifischer zu entwickeln, um einen grösseren Erfolg zu sichern.

Während man dem Problem der Lock- und Geschmacksstoffe bereits viel Aufmerksamkeit gewidmet hat, ist das artspezifische Verhalten der Nager weit weniger für die praktische Anwendung studiert worden.

Das Nagebedürfnis ist ein Verhaltensmerkmal, das bisher bei der Formulierung wirksamer Köder ganz unzureichend berücksichtigt wurde. So wird beispielsweise in der DE-AS 1 146 695 ein Giftköder für Nagetiere beschrieben, welcher aus einem Netz von vergifteten Nährstoffteilchen besteht, welche praktisch in einer Ebene nebeneinanderliegen und unter sich durch eine in den Zwischenräumen vorhandene Bindemittelhaut aus wasserunlöslichen, synthetischen Hochpolymeren verbunden sind, wobei das Bindemittel im wesentlichen auf der Höhe der Berührungspunkte zwischen den Nährstoffteilchen lokalisiert ist.

Die im Handel gegen Schadnager eingesetzten Paraffinblöcke (mit Lockfutter) haben gezeigt, dass sie vom Geschmack und von der Konsistenz her die in sie gesetzten Erwartungen nicht erfüllen.

Festkörper mit gleitenden Schichten (wie z. B. Paraffin), halbfestes Material oder gar gelartige Massen werden den stofflichen Anforderungen für einen wirksamen Köder nicht gerecht.

Aufgabe der vorliegenden Erfindung ist es daher, als rodentizides Mittel einen festgeformten Köderblock vorzuschlagen, der a) eine genügende Härte, insbesondere spröde Härte besitzt und b) gleichzeitig wohlschmeckend (palatabel) ist, wodurch das Schadtier zum anhaltenden Benagen und Verzehren angeregt wird.

Es hat sich gezeigt, dass diese Aufgabe überraschend schnell und einfach durch einen Blockköder gelöst werden kann, der dadurch erhältlich ist, daß man Polyvinylacetat allein oder Copolymerisate von Vinylacetat und Acrylsäureester, Methacrylsäureester und/oder Acrylnitril in wässriger Dispersion mit dem gewünschten festen oder breiartigen essbaren Anteil des Giftköders innig vermischt und die entstandene breiartige Masse zu 4 bis 1 000 g schweren Blöcken beliebiger Form vergiesst oder verformt und trocknet. Neben diesen drei wesentlichen Komponenten Polymerisat, Futteranteil und Gift kann der erfindungsgemässe Block-Köder in geringen Mengen (bis ca. 10 Gew.-%) sonstige, den jeweiligen Praxis-Erfordernissen angepasste Zusätze enthalten.

Die so nach dem vorstehend beschriebenen erfindungsgemässen Verfahren durch Verklebung mit Polyvinylacetat oder einem seiner Copolymerisate als Bindemittel hergestellten Hart-Köder oder Block-Köder mit Gewichten zwischen 4-5 und 1 000 g, vorzugsweise 10-100 g, besitzen folgende gleichzeitig vorhandene und für die Praxis sehr erwünschte Eigenschaften :

2

1) Genügende spröde Härte, die für ein Benagen besonders geeignet ist und von wildlebenden Ratten und Mäusen geschätzt wird ;

2) Hohe Palatabilität, die insbesondere bei wildlebenden Ratten dazu führt, dass solche Blockköder gegenüber einem gleichartigen Futter ohne Polymeren-Zusatz eindeutig bevorzugt werden ;

3) Wasserresistenz, die zwar ein langsames (maximal 20 %iges) Quellen des Block-Köders bewirken kann, seine Festigkeit jedoch nicht beeinträchtigt und ihn über einen mehrwöchigen Zeitraum nach dem Auslegen vor dem Zerfall bewahrt.

In der Praxis hat man polymere Stoffe bereits als Bindemittel für Aktiv-Substanzen vorgeschlagen. So beschreibt die JP-Auslegeschrigft 72/19 199 (Ikari Yakuhin AG.) das Verkneten von Norbormide [= 5-($\alpha$-Hydroxy-$\alpha$-2-pyridylbenzyl)-7-($\alpha$-2-pyridylbenzyliden)norborn-5-en-2,3-dicarboximid] im Verhältnis von etwa 2 : 1 mit einer wässrigen Polyvinylacetat-Emulsion mit anschliessender Feinmahlung, Aussiebung und Trocknung bei 80 °C. Das so hergestellte Giftpuder wird im Verhältnis von ca. 1 : 100 mit Getreidemehl vermischt und ergibt in dieser Form einen Anwendungsköder in Staubform. Aufgabenstellung und Resultat sind von denjenigen vorliegender Erfindung völlig verschieden.

Die Palatabilität, die ein grösserer Polyvinylacetat-(Co)Polymerenanteil bewirkt, ist bei diesem Lösungsvorschlag ebensowenig erkannt worden wie die Möglichkeit, zusammen mit allen Hilfsstoffen in einem Arbeitsgang verklebte Block-Köder herzustellen, die dem Nagebedürfnis von Ratten und Mäusen entgegenkommen. Desgleichen lässt die vorliegende Literaturstelle keinen Rückschluss auf eine wie auch immer geartete Wasserresistenz zu.

Die vorliegende Erfindung betrifft im engeren Sinne ein Verfahren zur Herstellung eines festgeformten, benagbaren, 4-1 000 g schweren rodentiziden Block-Köders und ist dadurch gekennzeichnet, dass 96-70 Gewichtsprozent (bezogen auf den fertigen Köder) eines vorfabrizierten Nahrungsmittel-Anteils, welcher neben der Giftkomponente von 0,001-1,0 Gewichtsprozent gegebenenfalls bis zu 10 % seines Gewichts mineralische und pflanzliche Füllstoffe, Geschmackskorrigenzien, Mikrobizide, Keimungshemmer, Farbstoffe und/oder andere anwendungstechnisch geeignete Zusätze enthält, mit einer wässrigen Dispersion von Polyvinylacetat oder von einem Copolymerisat von Vinylacetat mit Acrylsäureester, Methacrylsäureester und/oder Acrylnitril (deren Dispersions-Bestandteile nach Trocknung den Gewichtsanteil der Gesamtmischung des Köders auf 100 % ergänzen), während 1-60 Minuten unter gegebenenfalls Zugabe von soviel Wasser vermischt, dass eine giessfähige Masse entsteht und diese zu Blöcken gewünschter Gestalt unter Trocknung vergossen oder verformt und bei 10-60 °C getrocknet wird.

Die Lufttrocknung der erstarrenden Masse des Block-Köders wird bevorzugt bei Raumtemperatur vorgenommen.

Für die Copolymerisation kommen als Partner für Vinylacetat grundsätzlich solche Monomere in Frage, die harte Verklebungen liefern und für Nager geschmacklich angenehm sind. Acrylsäureester und Methacrylsäureester, bei denen sich die alkoholische Komponente vom Methanol, Ethanol, Butanol, Hydroxyethanol oder Ethoxyethanol ableiten, sind bevorzugt. Daneben können auch Ester höherer Alkohole, wie Decylalkohol und Laurylalkohol, eingesetzt werden.

Handelsübliche (Poly)Vinylacetat-Dispersionen enthalten häufig bis zu 5 % sonstige ungesättigte Verbindungen wie Acrylsäure, Crotonsäure, Maleinsäure, Maleinanhydrid oder höhere Homologe des Polyvinylacetats wie Polyvinylpropionat oder Polyvinylbutyrat. Solche Stoffe, die die Härtung des Polymeren für den erfindungsgemässen Zweck günstig beeinflussen, gelten als Copolymerisat-Bestandteile, die von der vorliegenden Erfindung mit erfasst werden.

Als mineralische und pflanzliche Zusätze bzw. Streckmittel kommen zum Beispiel Kaolin, Talkum, Bolus, Kreide, Kalkstein, Ataclay, Dolomit, Diatomeenerde, gefällte Kieselsäure, Erdalkalisilikate, Natrium- und Kaliumaluminiumsilikate (Feldspäte und Glimmer), Calcium- und Magnesiumsulfate, Magnesiumoxid, gemahlene Kunststoffe, gemahlene pflanzliche Produkte, wie Baumrindemehl, Holzmehl, Nusschalenmehl, Cellulosepulver, je für sich oder als Mischungen untereinander in Frage.

Der Futter-Anteil des Block-Köders kann alle Arten von haltbaren festen Nahrungsmitteln umfassen, bevorzugt lagerfähiges Hartfutter, vor allem solches auf Getreidebasis wie Backwaren, Mehl, Getreidekörner und Getreideschrot sowie entsprechende Mischungen davon. Es kommt aber auch anderes Futter. tierischer oder pflanzlicher Herkunft in Frage wie Fisch-, Fleisch- oder Knochenrückstände, oder aber Reben- und Maistrester, Oelkuchen, getrocknete Früchte, Fruchtschalen und anderes.

Ein weiterer Gegenstand der Erfindung ist ein rodentizider, festgeformter Block-Köder im Gewicht von 4-1 000 g, bestehend im wesentlichen aus spröd-hartem Polyvinylacetat oder Copolymerisat von Vinylacetat und Acrylsäureester, Methacrylsäureester und/oder Acrylnitril sowie einem mit einem rodentiziden Gift präparierten Nahrungsmittel, der auf die vorstehend beschriebene Weise erhältlich ist.

Im allgemeinen liegt die Polymerenkomponente in 4-30 Gew.-% des Block-Köders vor, und die Restmenge an essbarer Komponente (incl. bis zu 10 Gew.-% mögliche Zusätze), die den Gesamtanteil zu 100 Gewichtsprozent ergänzt, enthält 0,001-1,0 Gewichtsprozent, vorzugsweise 0,005-0,1 Gewichtsprozent, Giftkomponente.

Die Polymerenkomponente im Block-Köder beträgt bevorzugt 7-15 Gewichtsprozent, beispielsweise 10 Gewichtsprozent.

Vinylacetat-Copolymerisate sind bevorzugt und unter diesen die Vinylacetat-Acrylsäureniederalkylester-Copolymerisate.

Als Wirkstoffe kommen grundsätzlich alle bekanntgewordenen Rodentizide in Frage, bevorzugt solche aus der Klasse der Antikoagulanzien wie die 4-Hydroxycumarin-Derivate, von denen die folgenden bevorzugt sind :

3-(3-Biphenyl-4-yl-1,2,3,4-tetrahydro-1-naphthyl)-4-hydroxycumarin, (Difenacoum),
3-[3-(4'-Brombiphenyl-4-yl)-1,2,3,4-tetrahydro-1-naphthyl]-4-hydroxycumarin, (Brodifacoum),
3-(4'-Brombiphenyl-4-yl-3-hydroxy-1-phenylpropyl)-4-hydroxycumarin, (Bromadiolone),
3-(α-Acetonylbenzyl)-4-hydroxycumarin, (Warfarin),
3-(α-Acetonyl-4-chlorobenzyl)-4-hydroxycumarin, (Cumachlor),
4-Hydroxy-3-(1,2,3,4-tetrahydro-1-naphthyl)cumarin, (Coumatetralyl),
3-(2-Acetonylfurfuryl)-4-hydroxycumarin, (Cumafuryl).

Bevorzugt sind ferner als Wirkstoffe die Antikoagulanzien, die sich vom 1,3-Indandion ableiten, und von denen die folgenden bevorzugt sind :

2-[2-(4-Chlorphenyl)-2-phenylacetyl]-1,3-indandion, (Chlorophacinon),
2-Diphenylacetyl-1,3-indandion, (Diphacinone),
2-Pivaloyl-1,3-indandion, (Pindon).

Als weiterer rodentizider Wirkstoff ist ferner 2,4,6-Tribrom-N-methyl-2',4'-dinitro-6'-trifluormethyldiphenylamin (Bromethalin) bevorzugt.

Die vorliegende Erfindung betrifft ferner die Verwendung eines wie vorstehend beschriebenen rodentiziden Block-Köders zur Bekämpfung von Nagetieren.

Die vorliegende Erfindung betrifft ferner ein Verfahren zur Bekämpfung von Nagetieren, besonders Ratten und Mäusen, durch Verabreichen und Auslegen von rodentiziden Ködern, wie sie vorstehend als benagbare Blockköder beschrieben sind.

Im folgenden wird die Herstellung eines besonders bevorzugten Präparats geschildert.

## Herstellungsbeispiel (für 1 kg Trockenköder)

In einem Hobarth Mischer mit 3 Liter Rührkessel werden 900 g mit Cumachlor (0,01 %) präparierte und mit dem Lebensmittelfarbstoff « Patentblau V » (0,05 %) [Ca-Salz des 2,4-Disulfo-5-hydroxy-4',4"-bis(diäthylamino)triphenylcarbinol-anhydrids. Color Index 42051] angefärbte Weizenkörner eingefüllt.

Unter langsamen Rühren werden 179 g einer ca. 56 %igen wässrigen Vinylacetat/Acrylsäurebutylester-Copolymerisat-Dispersion zugegeben und — je nach Viskosität der Dispersion — noch 50-100 ml Wasser. Nach 2-5-minütigem Rühren ergibt sich eine zäh fliessende Masse, die in bereitgestellte Formen gefüllt wird, um daraus Block-Köder von 4-35 g zu gewinnen, die in irgendeiner gewünschten Form vorliegen (Platten, Würfel, Kegelstümpfe, Stangen o. dgl.).

Die weisslich gefärbte, leicht schaumige Masse wird luftgetrocknet und durch die Verdunstung des Wassers bildet sich eine glasklare, nicht mehr wasserlösliche (aber noch quellbare) verleimte Block-Körner-Masse von einem Kilogramm.

Anstatt Cumachlor lassen sich auch sehr vorteilhaft Bromadiolon oder Bromethalin verwenden.

Anstatt « Patentblau V » kann auch ein beliebiger anderer, für diesen Zweck geeigneter Warn-Farbstoff verwendet werden.

An Stelle der Weizenkörner lässt sich vorteilhaft auch eine Schrotmischung bestehend aus

26,6 Gew.-% Hafergrütze
26,67 Gew.-% Futterreis
26,67 Gew.-% Weizenschrot

verwenden, die, auf gleiche Art hergestellt, mit 20 Gew.-% Polyvinylacetat oder Vinylacetat/Acrylsäureester-Copolymerisat oder Vinylacetat/Acrylnitril-Copolymerisat verklebt wird.

## Biologisches Beispiel (Frassköder-Bevorzugung)

An 2 Gruppen von 24 Labor-Ratten und 24 wilden Mäusen wurde die Neigung der Tiere zur Bevorzugung des erfindungsgemässen Block-Köders gegenüber gleichartigem Futter ohne Hartverklebung mit Polyvinylacetat (Copolymerisat) geprüft.

a) 12 männliche und 12 weibliche Laborratten mit Körpergewichten zwischen 174-261 g wurden in Einzelkäfigen mit Drahtgitterboden gehalten. Unter den Käfigen befand sich ein Auffangtablett mit Filterpapier, um herunterfallende Futter- und Köderteile aufzufangen und eine Rückwägung zu ermöglichen.

Wasser stand den Tieren aus speziellen Trinkflaschen *ad libitum* zur Verfügung.

Neben den Trinkflaschen wurde den Tieren das Normalfutter, bestehend aus einem Gemenge von 1/3 Hafergrütze, 1/3 Futterreis und 1/3 Weizenschrot, in einem Behälter angeboten.

**0 088 051**

Die verwendeten Block-Köder gemäss vorliegender Erfindung bestehend aus

26,66 Gew.-% Hafergrütze
26,67 Gew.-% Futterreis
26,67 Gew.-% Weizenschrot
20,00 Gew.-% Vinylacetat-Acrylsäureester-Copolymerisat

besassen durchschnittlich ein Gewicht von 35 g und Abmessungen von 40 × 40 × 30 mm. Sie wurden den Tieren in einem Behälter an einer rechtwinklig zur Trinkflasche befindlichen Seitenwand angeboten.

Während 4 Tagen bei 20 ± 2 °C und simuliertem Tageslicht (13 Stunden Hellphase, 11 Stunden Dunkelphase) wurden gleichzeitig Normalfutter und Blockköder angeboten. Der tägliche Konsum wurde durch Rückwägung des angebotenen Futters für jedes Einzeltier bestimmt. Die in 4 Tagen aufgenommene durchschnittliche Futtermenge stellte sich wie folgt dar :

| Spezies | Durchschnittsmenge an | |
| --- | --- | --- |
| | Blockköder | Normalfutter |
| Männliche Ratten | 73,8 ± 10,3 g | 52,4 ± 9,1 g |
| Weibliche Ratten | 69,0 ± 10,1 g | 21,4 ± 6,6 g |
| Gesamt-Durchschnittsmenge | 71,4 ± 10,2 g | 36,9 ± 7,9 g |

Die Block-Köderformulierung wird von Ratten im Verhältnis 2:1 gegenüber dem Normalfutter bevorzugt. Auffällig ist deutliche 3:1 Bevorzugung bei weiblichen Ratten.

b) 24 Mäuse beiderlei Geschlechts (Mus musculus domesticus) aud der Nachzucht von Wildfängen mit Körpergewichten zwischen 18 und 32 g wurden in Einzelkäfigen dem gleichen, unter a) beschriebenen Test unterworfen. Nach einer Angewöhnungsphase von ca. 1,5 Tagen, während derer die Tiere das anfangs bevorzugte Weichfutter mehr und mehr zu Gunsten des Block-Köders vernachlässigten, betrug die durchschnittliche Nahrungsaufnahme pro Tag

| | 3. Tag | 4. Tag |
| --- | --- | --- |
| Block-Köder: Weichfutter | 4,0:1,1 g | 4,0:0,7 g |

**Patentansprüche**

1. Rodentizider, festgeformter Block-Köder im Gewicht von 4-1 000 g, bestehend im wesentlichen aus spröd-hartem Polyvinylacetat oder Copolymerisat von Vinylacetat und Acrylsäureester, Methacrylsäureester und/oder Acrylnitril sowie einem, mit einem rodentiziden Gift präparierten Nahrungsmittel, erhältlich durch inniges Vermischen des mit dem Gift versehenen Nahrungsmittels mit einer wässrigen Dispersion des Polymers und Vergiessen oder Verformen und anschliessendem Trocknen des so erhaltenen Gemisches.

2. Köder gemäss Anspruch 1, worin der Polymer-Anteil 4-30 Gewichtsprozent beträgt und die Giftkomponente in einer Menge von 0,001 bis 1,0 Gewichtsprozent, bezogen auf den restlichen Nahrungsmittel-Anteil, vorliegt.

3. Köder gemäss Anspruch 2, worin der Polymer-Anteil 7-15 Gewichtsprozent beträgt.

4. Köder gemäss Anspruch 2, worin der Polymer-Anteil 10 Gewichtsprozent beträgt.

5. Köder gemäss einem der Ansprüche 1 bis 4, wobei der Polymeranteil im wesentlichen ein Copolymerisat aus Vinylacetat und Acrylsäureester ist.

6. Köder gemäss Anspruch 2, worin die Giftkomponente in einer Menge von 0,005-0,1 Gewichtsprozent, bezogen auf den Nahrungsmittel-Anteil, vorliegt.

7. Köder gemäss Anspruch 2, worin der Nahrungsmittel-Anteil bis zu 10 Gewichtsprozent sonstige Zusätze, ausgewählt aus der Gruppe mineralischer oder pflanzlicher Füllstoffe, Geschmackskorrigenzien, Mikrobizide, Keimungshemmer und Farbstoffe, enthält.

8. Köder gemäss Anspruch 1, worin der Nahrungsmittel-Anteil aus einem Hartfutter auf Getreidebasis besteht.

5

9. Köder gemäss Anspruch 1, wobei das rodentizide Gift aus der Klasse der Antikoagulanzien ausgewählt ist.

10. Köder gemäss Anspruch 9, wobei das Antikoagulanz ein 4-Hydroxycumarin-Derivat ist.

11. Köder gemäss Anspruch 10 enthaltend 3-(α-Acetonyl-4-chlorbenzyl)-4-hydroxycumarin (= Cumachlor).

12. Köder gemäss Anspruch 10 enthaltend 3-(4′-Brombiphenyl-4-yl-3-hydroxy-1-phenylpropyl)-4-hydroxycumarin (= Bromadiolone).

13. Köder gemäss Anspruch 1, wobei das rodentizide Gift 2,4,6-Tribrom-N-methyl-2′,4′-dinitro-6′-trifluormethyldiphenylamin (= Bromethalin) ist.

14. Köder gemäss Anspruch 1, der aus 90 Gewichtsprozent präparierten Getreidekörnern, die 0,01 Gewichtsprozent Cumachlor oder Bromadiolon und 0,05 Gewichtsprozent Farbstoff enthalten, und 10 Gewichtsprozent Vinylacetat/Acrylsäureester-Copolymerisat besteht.

15. Köder gemäss Anspruch 1, der aus 90 Gewichtsprozent präparierten Getreidekörnern, die 0,005-0,1 Gewichtsprozent Bromethalin enthalten, und 10 Gewichtsprozent Vinylacetat/Acrylsäureester-Copolymerisat besteht.

16. Verfahren zur Herstellung eines spröd-harten, 4 bis 1 000 g schweren rodentiziden Block-Köders, dadurch gekennzeichnet, dass der Nahrungsmittel-Anteil, der später 96-70 Gewichtsprozent des trockenen Köders betragen soll und der neben der Gift-Komponente von 0,001-1,0 Gewichtsprozent bis zu 10 Gewichtsprozent seines Eigengewichts mineralische und pflanzliche Füllstoffe, Geschmackskorrigenzien, Mikrobizide, Keimungshemmer, Farbstoffe und/oder andere anwendungstechnisch geeignete Zusätze enthalten kann, mit einer wässrigen Dispersion von Polyvinylacetat oder von einem Copolymerisat aus Vinylacetat und Acrylsäureester, Methacrylsäureester und/oder Acrylnitril während 1-60 Minuten unter gegebenenfalls Zugabe von soviel Wasser vermischt, dass eine giessfähige Masse entsteht, die zu Blöcken gewünschter Gestalt vergossen oder verformt und bei 10-60 °C getrocknet wird.

17. Verfahren zur Bekämpfung von Nagetieren, besonders Ratten und Mäusen, durch Verabreichen und Auslegen von rodentiziden Block-Ködern gemäss einem der Ansprüche 1-15.

18. Verwendung eines rodentiziden Block-Köders gemäss einem der Ansprüche 1-15 zur Bekämpfung von Nagetieren.

## Claims

1. A solidly formed rodenticidal block bait which weighs 4-1 000 g and which consists essentially of brittle-hard polyvinyl acetate, or of a brittle-hard copolymer of vinyl acetate and acrylic acid ester, methacrylic acid ester and/or acrylonitrile, and a foodstuff treated with a rodenticidal poison, which bait is obtainable by homogeneously mixing the foodstuff containing the poison with an aqueous dispersion of the polymer, casting or otherwise forming the resultant mixture, and subsequently drying the product obtained.

2. A bait according to claim 1, wherein the polymer constituent amounts to 4-30 per cent by weight, and the poison component is present in an amount of 0.001 to 1.0 per cent by weight, based on the foodstuff constituent.

3. A bait according to claim 2, wherein the polymer constituent amounts to 7-15 per cent by weight.

4. A bait according to claim 2, wherein the polymer constituent amounts to 10 per cent by weight.

5. A bait according to any one of claims 1 to 4, wherein the polymer constituent is essentially a copolymer formed from vinyl acetate and acrylic acid ester.

6. A bait according to claim 2, wherein the poison component is present in an amount of 0.005-0.1 per cent by weight, based on the foodstuff constituent.

7. A bait according to claim 2, wherein the foodstuff constituent contains up to 10 per cent by weight of other additives selected from the group consisting of mineral or vegetable fillers, taste corrigents, microbicides, germination inhibitors and dyes.

8. A bait according to claim 1, wherein the foodstuff constituent consists of a hard feed based on cereals.

9. A bait according to claim 1, wherein the rodenticidal poison is selected from the class of anticoagulants.

10. A bait according to claim 9, wherein the anticoagulant is a 4-hydroxycoumarin derivative.

11. A bait according to claim 10, which contains 3-(α-acetonyl-4-chlorobenzyl)-4-hydroxycoumarin (= Cumachlor).

12. A bait according to claim 10, which contains 3-(4′-bromobiphenyl-4-yl-3-hydroxy-1-phenylpropyl)-4-hydroxycoumarin (= Bromadiolone).

13. A bait according to claim 1, wherein the rodenticidal poison is 2,4,6-tribromo-N-methyl-2′,4′-dinitro-6′-trifluoromethyldiphenylamine (= Bromethalin).

14. A bait according to claim 1, which consists of 90 per cent by weight of prepared cereal grain containing 0.01 per cent by weight of Cumachlor or Bromadiolone and 0.05 per cent by weight of dye ; and 10 per cent by weight of vinyl acetate/acrylic acid ester copolymer.

15. A bait according to claim 1, which consists of 90 per cent by weight of prepared cereal grain containing 0.005-0.1 per cent by weight of Bromethalin; and 10 per cent by weight of a vinyl acetate/acrylic acid ester copolymer.

16. A process for producing a brittle-hard rodenticidal block bait weighing 4 to 1 000 g, which process comprises mixing, for 1-60 minutes, the foodstuff constituent, which constituent is ultimately to constitute 96-70 per cent by weight of the dried dry bait, and which can contain, in addition to the poison component of 0.001-1.0 per cent by weight, up to 10 per cent by weight (based on its own weight) of mineral and vegetable fillers, taste corrigents, microbicides, germination inhibitors, dyes and/or other additives suitable with regard to application technique, with an aqueous dispersion of polyvinyl acetate, or of a copolymer of vinyl acetate and acrylic acid ester, methacrylic acid ester and/or acrylonitrile, water being added, if neccessary, so that a pourable mixture is obtained, then casting or otherwise forming this mixture into blocks of a desired shape, and subsequently drying these at 10-60 °C.

17. A method of controlling rodents, particularly rats and mice, which method comprises the administration and putting out of a rodenticidal block bait according to any one of claims 1 to 15.

18. Use of a rodenticidal block bait according to any one of claims 1 to 15 for controlling rodents.

**Revendications**

1. Appât rodenticide, solidement moulé en blocs au poids de 4 à 1 000 g, consistant essentiellement en acétate de polyvinyle ou un copolymère de l'acétate de vinyle et d'esters acryliques, d'esters méthacryliques et/ou de l'acrylonitrile, dur et cassant, et un aliment contenant un poison rodenticide, qu'on obtient par mélange intime de l'aliment contenant le poison avec une dispersion aqueuse du polymère et coulée ou moulage suivi du séchage du mélange obtenu.

2. Appât selon la revendication 1, dans lequel la proportion de polymère est de 4 à 30 % en poids et le composant toxique est contenu en quantité de 0,001 à 1,0 % en poids par rapport à la proportion restante consistant en aliment.

3. Appât selon la revendication 2, dans lequel la proportion de polymère est de 7 à 15 % en poids.

4. Appât selon la revendication 2, dans lequel la proportion de polymère est de 10 % en poids.

5. Appât selon l'une des revendications 1 à 4, dans lequel le polymère contenu est essentiellement un copolymère de l'acétate de vinyle et d'un ester acrylique.

6. Appât selon la revendication 2, dans lequel le composant toxique est présent en quantité de 0,005 à 0,1 % en poids par rapport à l'aliment contenu.

7. Appât selon la revendication 2, dans lequel l'aliment contenu contient jusqu'à 10 % en poids d'autres additifs choisis dans le groupe des matières de charge minérales ou végétales, des correcteurs de goût, des microbicides, des inhibiteurs de germination et des colorants.

8. Appât selon la revendication 1, dans lequel l'aliment contenu consiste en un aliment dur à base de céréales.

9. Appât selon la revendication 1, dans lequel le poison rodenticide est choisi dans la classe des anticoagulants.

10. Appât selon la revendication 9, dans lequel l'anticoagulant est un dérivé de la 4-hydroxycoumarine.

11. Appât selon la revendication 10, contenant de la 3-(α-acétonyl-4-chlorobenzyl)-4-hydroxycoumarine (= Cumachlor).

12. Appât selon la revendication 10, contenant de la 3-(4'-bromobiphényle-4-yl-3-hydroxy-1-phénylpropyl)-4-hydroxycoumarine (= Bromadiolone).

13. Appât selon la revendication 1, dans lequel le poison rodenticide est la 2,4,6-tribromo-N-méthyl-2',4'-dinitro-6'-trifluorométhyldiphénylamine (= Bromethalin).

14. Appât selon la revendication 1, consistant en 90 % en poids de graines de céréales préparées, contenant 0,01 % en poids de Cumachlor ou de Bromadiolone et 0,05 % en poids de colorant, et 10 % en poids d'un copolymère acétate de vinyle/ester acrylique.

15. Appât selon la revendication 1, consistant en 90 % en poids de graines de céréales préparées, contenant 0,005 à 0,1 % en poids de Bromethalin, et 10 % en poids d'un copolymère acétate de vinyle/ester acrylique.

16. Procédé de préparation d'un appât en blocs rodenticides durs et cassants pesant de 4 à 1 000 g, caractérisé en ce que l'on mélange l'aliment prévu qui représentera ultérieurement 96 à 70 % en poids de l'appât sec et qui, en plus du composant toxique en quantité de 0,001 à 0,1 % en poids, allant jusqu'à 10 % en poids de son propre poids, peut contenir des matières de charge minérales et végétales, des correcteurs de goût, des microbicides, des inhibiteurs de germination, des colorants et/ou d'autres additifs appropriés à l'application, avec une dispersion aqueuse d'acétate de polyvinyle ou d'un copolymère d'acétate de vinyle et d'ester acrylique, d'ester méthacrylique et/ou d'acrylonitrile pendant 1 à 60 minutes en ajoutant éventuellement de l'eau en quantité suffisante pour former une masse moulable qu'on coule ou qu'on moule en blocs à la forme voulue et qu'on sèche à une température de 10 à 60 °C.

17. Procédé pour combattre les rongeurs, en particulier les rats et les souris, par administration et exposition d'appâts en blocs rodenticides selon l'une des revendications 1 à 15.

18. Utilisation d'un appât en blocs rodenticides selon l'une des revendications 1 à 15 dans la lutte contre les rongeurs.